# EUROPÄISCHE PATENTSCHRIFT

(11) **EP 2 042 955 B1**
(45) Veröffentlichungstag und Bekanntmachung des Hinweises auf die Patenterteilung: **04.08.2010**
(21) Anmeldenummer: 07019126.7
(22) Anmeldetag: 28.09.2007
(51) Int. Cl.: G05B 19/05

(54) **Unterstützung von Servicehandlungen an einer speicherprogrammierbaren Steuerung (SPS)**
Support for service actions on a programmable logic controler (PLC)
Aide lors d'opérations d'entretien sur un automate programmable industriel (API)

(43) Veröffentlichungstag der Anmeldung: 01.04.2009
(73) Patentinhaber: SIEMENS AKTIENGESELLSCHAFT, 80333 München (DE)
(72) Erfinder: Griessbach, Gunter, 09423 Gelenau (DE); Langer, Gunter, 01728 Bannewitz (DE)

(56) Entgegenhaltungen:
- EP-A- 0 378 465
- FR-A- 2 694 439
- FR-A- 2 741 986

## Beschreibung

Die Erfindung betrifft Baugruppen einer speicherprogrammierbaren Steuerung (SPS), eine SPS, ein Verfahren, ein Computerprogrammprodukt sowie ein auf diesem gespeichertes Programm zur Unterstützung von Servicehandlungen an einer SPS.

Speicherprogrammierbare Steuerungen, die aus mehreren Baugruppen bestehen, kommen insbesondere auf dem Gebiet der Automatisierungstechnik zum Einsatz. Bei der Verdrahtung, Inbetriebnahme bzw. beim Service von speicherprogrammierbaren Steuerungen ist es üblich und sinnvoll, dass die Baugruppen selbst die Servicehandlungen unterstützen. In der Regel wird heute an jeder Baugruppe symbolisch dargestellt, um welche Art von Baugruppe es sich handelt, wie viele Kanäle vorhanden/verfügbar sind und wie diese anzuschließen sind. Meist ist den Kanälen oder Schnittstellen direkt eine Statusanzeige (LED) visuell zugeordnet. Damit ist es möglich, die Statusanzeige schon zur Kontrolle beim Verdrahten der SPS zu nutzen. Die symbolische Baugruppenbeschriftung ist oft zusätzlich an der Innenseite einer nach der Seite zu öffnenden Tür/Abdeckung angebracht, so dass eine direkte Zuordnung der Beschriftung zu den Klemmen und den Statusanzeigen möglich ist. Zum Teil können z.B. bei Digitaleingangsbaugruppen die Statusanzeigen schon genutzt werden, wenn die SPS noch gar nicht eingeschaltet wurde. Eine direkte Kontrolle der Zuordnung der Verdrahtung zum Digitaleingang vermeidet Verdrahtungsfehler schon im Ansatz.

Bisher gibt es Beschränkungen in der zur Verfügung stehenden Fläche für die symbolische Darstellung. Eine visuelle Zuordnung zwischen Darstellung, Klemmen und Anzeigen ist nur gegeben, wenn sich die Tür im Servicefall links oder rechts neben den Anschlüssen bzw. Anzeigen befindet. Auch kann bei konfigurierbaren Baugruppen nicht flexibel die Darstellung angepasst werden. Nicht alle Baugruppen lassen eine passive Verdrahtungskontrolle zu (z.B. Digitalausgänge). Auch sind Diagnosemeldungen (z.B. Kurzschluss und Drahtbruch) bei der Inbetriebnahme nicht verfügbar.

In der FR 2 741 986 A ist ein Anzeigedisplay für eine speicherprogrammierbare Steuerung offenbart. Die Anzeigevorrichtung ist mit einzelnen LEDs und einer Segmentanzeige aufgebaut aus LEDs ausgestaltet.

In neueren speicherprogrammierbaren Steuerungen werden die Anzeigen (LEDs oder Displays) in die Türen der Baugruppen eingebaut. Die Interfaces der Baugruppen werden zugänglich, wenn man die Türen zum Öffnen nach oben schwenkt. Somit besteht das Problem, dass bei geöffneter Tür keine direkte Zuordnung zu den Klemmstellen/Steckverbindern mehr möglich ist. Selbst wenn an der Rückseite der Tür die Anzeigen sichtbar sind, ist eine vertikale Zuordnung erschwert.

Der Erfindung liegt die Aufgabe zugrunde, Baugruppen einer SPS, eine SPS, ein Verfahren, ein Computerprogrammprodukt sowie ein auf diesem gespeichertes Programm zur Durchführung des Verfahrens anzugeben, mit denen/der/dem Servicehandlungen an einer SPS besser als bei den bekannten Lösungen unterstützt werden.

Diese Aufgabe wird gelöst durch eine Baugruppe einer SPS mit einer an der Frontseite befindlichen Tür, hinter der Klemmstellen und/oder Steckverbinder sowie eine Anzeige angeordnet sind, wobei die SPS in einen speziellen Betriebszustand versetzbar ist, in dem eine Statusmeldung zu jeder Klemmstelle und/oder jedem Steckverbinder über eine Kommunikationsverbindung an eine zweite Baugruppe übermittelbar ist und in dem mittels der Anzeige ein Hinweis auf die zweite Baugruppe ausgebbar ist.

Die Aufgabe wird weiter gelöst durch eine Baugruppe einer SPS mit einer Anzeigeeinheit, wobei die SPS in einen speziellen Betriebszustand versetzbar ist, in dem über eine Kommunikationsverbindung Statusmeldungen von Klemmstellen und/oder Steckverbindern einer zweiten Baugruppe übermittelbar und mittels der Anzeigeeinheit anzeigbar ist.

Die Aufgabe wird ferner gelöst durch eine SPS, ein Verfahren, ein Programm und ein Computerprogrammprodukt gemäß den Ansprüchen 11, 12, 17 bzw. 18.

In dem speziellen Betriebszustand ("Service") verlässt die SPS ihre normale Funktion. Der Betriebszustand "Service" unterstützt die Manipulation an einer Baugruppe (z.B. das Verdrahten mit Verdrahtungskontrolle) und nutzt dazu die Anzeigenmöglichkeiten einer weiteren Baugruppe. In diesem Betriebszustand muss die Kopfbaugruppe (CPU) bereits den Busausbau kennen und unabhängig vom späteren Anwenderprogramm die Kommunikation zwischen den Baugruppen organisieren. Hierzu ist das erfindungsgemäße Verfahren (Programm) notwendig. Hilfreich ist es, wenn zu diesem Zeitpunkt schon die Konfiguration des Systems bekannt ist. Dann kann die Anzeigeeinheit bereits die vorgesehene Betriebsart der Baugruppe, an der die Servicehandlungen vorgenommen werden, darstellen, wodurch die dargestellten Informationen genauer sind. Aber auch ohne Kenntnis der späteren Konfiguration ist die neue Funktion "Service" schon sinnvoll nutzbar.

Nach Öffnen einer Baugruppentür werden die Statusmeldungen der Klemmstellen/Steckverbinder der geöffneten Baugruppe an der Anzeigeeinheit (beispielsweise mit LEDs als Anzeigeelemente) einer weiteren Baugruppe dargestellt. Vorzugsweise wird beispielsweise die rechte Nachbarbaugruppe genutzt; falls diese nicht gesteckt ist (oder nicht über eine Anzeigeeinheit verfügt), kann auch die linke Baugruppe die Anzeigefunktion übernehmen. Durch eine kleine Anzeige (z.B. ein Pfeil) hinter der geöffneten Tür wird die Zuordnung der Anzeigefunktion zu der Nachbarbaugruppe gekennzeichnet. Ebenfalls ist es möglich, dass man für den Servicefall eine spezielle Baugruppe (gemäß einem der Ansprüche 8 - 12) neben die zu wartende Baugruppe steckt, die die Anzeigefunktion übernimmt, wenn z.B. keine in der Nähe befindliche weitere Baugruppe eine Anzeigeeinheit aufweist. Es ist außerdem möglich, dass die Anzeigefunktion von einer anderen Baugruppe, beispielsweise einer CPU oder einer anderen Kopfbaugruppe übernommen wird. Das ist insbesondere dann sinnvoll, wenn nur die CPUs oder Kopfbaugruppen eine Anzeigeeinheit besitzen.

Der Vorteil der erfindungsgemäßen Baugruppen einer erfindungsgemäßen SPS mit einem erfindungsgemäßen Programm zur Durchführung eines erfindungsgemäßen Verfahrens liegt in der Nutzung der Anzeigemöglichkeiten einer weiteren Baugruppe, vorzugsweise einer Nachbarbaugruppe, im Servicefall, also bei der Verdrahtung, Inbetriebnahme und Wartung der SPS. Die Erfindung spart erhebliche Mehrkosten (z.B. für eine zusätzliche Anzeigeeinheit an der Rückseite der Tür einer jeden Baugruppe) und bietet dem Kunden/Anwender gleichzeitig eine sehr gute Unterstützung beim Handling, d.h. der Vornahme der Servicehandlungen (ease of use).

In einer vorteilhaften Form der Ausgestaltung sind Diagnosemeldungen bzgl. einer Verdrahtung der Klemmstellen und/oder Steckverbinder über die Kommunikationsverbindung an die zweite Baugruppe übermittelbar und von dieser mittels der Anzeigeeinheit anzeigbar. Hierdurch werden im Betriebszustand "Service" auch Diagnosen wie z.B. Kurzschluss- und Drahtbruchdiagnose unterstützt, wobei wiederum die Anzeigemöglichkeiten der weiteren Baugruppe genutzt werden.

In einer weiteren vorteilhaften Ausführungsform sind Statusmeldungen von zumindest einer Ein- und/oder Ausgabeeinheit über die Kommunikationsverbindung an die zweite Baugruppe übermittelbar und von dieser mittels der Anzeigeeinheit anzeigbar. Somit können auch Informationen über weitere Elemente der Baugruppe - wie z.B. Bedienelemente, Speicherkarten-oder beliebige Moduleinschübe - dem Kunden/Anwender dargestellt werden.

In einer weiteren vorteilhaften Ausführungsform ist der spezielle Betriebszustand durch Öffnen der Tür aktivierbar und durch Schließen der Tür deaktivierbar. Hierdurch wird zusätzlich das Handling für den Kunden/Anwender erleichtert.

In einer weiteren vorteilhaften Ausführungsform weist die zu wartende Baugruppe ebenfalls eine Anzeigeeinheit auf. Somit kann auch die zu wartende Baugruppe ihrerseits die Anzeigefunktion für eine andere Baugruppe übernehmen, an der gerade Servicehandlungen vorgenommen werden. Im Idealfall, das heißt wenn jede Baugruppe einer SPS über eine Anzeigeeinheit verfügt, kann in einer Reihe nebeneinander geschalteter Baugruppen jede Baugruppe für die jeweilige Nachbarbaugruppe die Anzeigefunktion übernehmen, was die Servicehandlungen des Kunden/Anwenders durch die Nähe der Darstellung der Status-und/oder Diagnosemeldungen zur zu wartenden Baugruppe erleichtert.

In einer weiteren vorteilhaften Ausführungsform ist die Anzeigeeinheit als Display ausgeführt. Bei Verwendung von Displays kann der Zustand der Klemmstellen/Steckverbinder sowie die Zuordnung besonders gut dargestellt werden. Zusätzlich lässt sich so bei konfigurierbaren Baugruppen die Darstellung flexibel anpassen.

In einer weiteren vorteilhaften Ausführungsform ist die Anzeigeeinheit in der Außenseite der Tür bzw. an der Frontseite der Baugruppe angeordnet. Auf diese Weise sind die Status-und/oder Diagnosemeldungen der zu wartenden Baugruppe ohne weitere Handgriffe direkt an der weiteren Baugruppe ablesbar.

Im Folgenden wird die Erfindung anhand der in den Figuren dargestellten Ausführungsbeispiele näher beschrieben und erläutert. Es zeigen:
- FIG 1: mehrere benachbarte Baugruppen einer SPS im Servi- cezustand,
- FIG 2: mehrere Baugruppen, zwischen denen ein freier Steckplatz ist, einer SPS im Servicezustand.

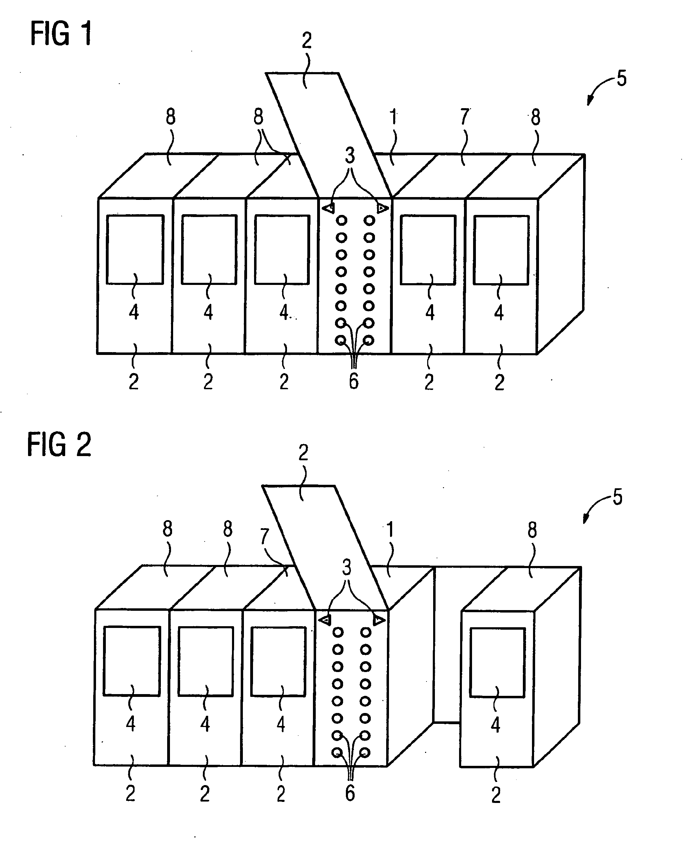

Fig 1 zeigt mehrere Baugruppen 1, 7, 8 einer SPS 5, die jeweils ein Display 4 in einer frontseitigen Tür 2 aufweisen, hinter der sich die Klemmstellen/Steckverbinder 6 befinden. An der Baugruppe 1 sollen Servicehandlungen durchgeführt werden (z.B. Verdrahten), die Tür 2 ist geöffnet und damit das eigene Display 4 hochgeklappt. Die SPS 5 befindet sich im Servicezustand, in dem Statusmeldungen zu den Klemmstellen/Steckverbindern über eine Kommunikationsverbindung im in der Figur gezeigten Ausführungsbeispiel an die rechte Nachbarbaugruppe 7 übermittelt werden, die die Statusmeldungen auf ihrem Display 4 anzeigt. Das heißt, das Display 4 der Baugruppe 7 übernimmt die Unterstützung der Servicehandlung an Baugruppe 1, wobei eine Anzeige 3 an der zu wartenden Baugruppe 1 dem Kunden/Anwender mitteilt, dass die rechte Nachbarbaugruppe 7 die Statusmeldungen auf ihrem Display 4 anzeigt. Ebenfalls angezeigt werden können auf dem Display 4 Diagnosemeldungen bzgl. der Verdrahtung der Klemmstellen/Steckverbinder 6, so dass auch während der Vornahme der Servicehandlung beispielsweise eine Kurzschluss- und Drahtbruchdiagnose möglich ist. Durch die Verwendung von erfindungsgemäßen Baugruppen 1, 7, 8 wird eine sehr gute Kunden/Anwenderunterstützung beim Handling einer erfindungsgemäßen SPS 5 erreicht, ohne dass Mehrkosten z.B. für ein zweites Display an der Rückseite der Tür 2 anfallen.

Fig. 2 zeigt eine Anordnung von Baugruppen 1, 7, 8 einer SPS 5, die im wesentlichen der in Fig. 1 gezeigten Anordnung entspricht. Allerdings ist in der Anordnung dieser Figur rechts neben der Baugruppe 1, an der eine Servicehandlung durchgeführt werden soll, ein freier Steckplatz. Daher übernimmt im Ausführungsbeispiel dieser Figur das Display 4 der linken Baugruppe 7 die Serviceunterstützung. Die Zuordnung des Displays 4 erfolgt wieder durch die Anzeige 3. Für eine Erläuterung der weiteren Bezugszeichen siehe die vorherige Figurenbeschreibung.

Zusammenfassend betrifft die Erfindung Baugruppen einer speicherprogrammierbaren Steuerung (SPS), eine SPS, ein Verfahren, ein Computerprogrammprodukt sowie ein auf diesem gespeichertes Programm zur Unterstützung von Servicehandlungen an einer SPS. Zur Erleichterung dieser Handlungen wird eine SPS mit zumindest einer ersten und einer zweiten Baugruppe vorgeschlagen, wobei die erste Baugruppe hinter einer an einer Frontseite befindlichen Tür Klemmstellen und/oder Steckverbinder sowie eine Anzeige aufweist und wobei die zweite Baugruppe eine Anzeigeeinheit aufweist. Zur Wartung der ersten Baugruppe wird die Tür dieser geöffnet und die SPS in einen speziellen Betriebszustand versetzt, in dem Statusmeldungen zu jeder Klemmstelle und/oder jedem Steckverbinder über eine Kommunikationsverbindung von der ersten Baugruppe an die zweite Baugruppe übermittelt werden, in dem mittels der Anzeige an der ersten Baugruppe ein Hinweis auf die zweite Baugruppe angezeigt wird und in dem die Statusmeldungen mittels der Anzeigeeinheit der zweiten Baugruppe ausgegeben werden.

## Patentansprüche

1. Baugruppe (1) einer speicherprogrammierbaren Steuerung (SPS) (5) mit einer an der Frontseite befindlichen Tür (2), hinter der Klemmstellen und/oder Steckverbinder (6) sowie eine Anzeige (3) angeordnet sind, wobei die SPS (5) in einen speziellen Betriebszustand versetzbar ist, in dem eine Statusmeldung zu jeder Klemmstelle und/oder jedem Steckverbinder (6) über eine Kommunikationsverbindung an eine zweite Baugruppe (7) übermittelbar ist, **dadurch gekennzeichnet, dass** ein Hinweis mittels der Anzeige (3) auf die zweite Baugruppe (7)in diesem Betriebszustand ausgebbar ist.

2. Baugruppe nach Anspruch 1,
wobei Diagnosemeldungen bzgl. einer Verdrahtung der Klemmstellen und/oder Steckverbinder (6) über die Kommunikationsverbindung an die zweite Baugruppe (7) übermittelbar sind.

3. Baugruppe nach Anspruch 1 oder 2
mit zumindest einer Ein- und/oder Ausgabeeinheit, zu der eine Statusmeldung über die Kommunikationsverbindung an die zweite Baugruppe (7) übermittelbar ist.

4. Baugruppe nach einem der vorhergehenden Ansprüche,
wobei der spezielle Betriebszustand durch Öffnen der Tür (2) aktivierbar und durch Schließen der Tür (2) deaktivierbar ist.

5. Baugruppe nach einem der vorhergehenden Ansprüche,
wobei die Baugruppe (1) eine Anzeigeeinheit (4) aufweist.

6. Baugruppe nach Anspruch 5,
wobei die Anzeigeeinheit (4) als Display ausgeführt ist.

7. Baugruppe nach Anspruch5 oder 6,
wobei die Anzeigeeinheit (4) in der Außenseite der Tür (2) angeordnet ist.

8. Baugruppe (7) nach Anspruch 5, wobei die Statusmeldungen der Klemmstellen und/oder Steckverbinder (6) der zweiten Baugruppe (1) mittels der Anzeigeeinheit (4) anzeigbar ist.

9. Baugruppe nach Anspruch 8,
wobei über die Kommunikationsverbindung Diagnosemeldungen bzgl. einer Verdrahtung der Klemmstellen und/oder Steckverbinder (6) der zweiten Baugruppe (1) übermittelbar und mittels der Anzeigeeinheit (4) anzeigbar ist.

10. Baugruppe nach Anspruch 8 oder 9,
wobei über die Kommunikationsverbindung Statusmeldungen von zumindest einer Ein- und/oder Ausgabeeinheit der zweiten Baugruppe (1) übermittelbar und mittels der Anzeigeeinheit (4) anzeigbar ist.

11. Baugruppe nach einem der Ansprüche 8 bis 10,
wobei die Anzeigeeinheit (4) als Display ausgeführt ist.

12. Baugruppe nach einem der Ansprüche 8 bis 11,
wobei die Anzeigeeinheit (4) an einer Frontseite der Baugruppe (7) angeordnet ist.

13. Speicherprogrammierbare Steuerung (SPS) (5) mit zumindest einer ersten Baugruppe (1) nach einem der Ansprüche 1 bis 7 und mit zumindest einer zweiten Baugruppe (7) nach einem der Ansprüche 8 bis 12, wobei die SPS (5) einen speziellen Betriebszustand aufweist, in dem Status- und/oder Diagnosemeldungen über eine Kommunikationsverbindung von der ersten Baugruppe (1) an die zweite Baugruppe (7) übermittelbar sind.

14. Verfahren zur Unterstützung von Servicehandlungen an einer speicherprogrammierbaren Steuerung (SPS) (5) mit zumindest einer ersten (1) und einer zweiten Baugruppe (7), wobei die erste Baugruppe (1) hinter einer an einer Frontseite befindlichen Tür (2) Klemmstellen und/oder Steckverbinder (6) sowie eine Anzeige (3) aufweist und wobei die zweite Baugruppe (7) eine Anzeigeeinheit (4) aufweist, wobei
- die Tür (2) der ersten Baugruppe (1) geöffnet wird,
- die SPS (5) in einen speziellen Betriebszustand versetzt wird, in dem
○ Statusmeldungen zu jeder Klemmstelle und/oder jedem Steckverbinder (6) über eine Kommunikationsverbindung von der ersten Baugruppe (1) an die zweite Baugruppe (7) übermittelt werden,
○ mittels der Anzeige (3) an der ersten Baugruppe (1) ein Hinweis auf die zweite Baugruppe (7) angezeigt wird und
○ die Statusmeldungen mittels der Anzeigeeinheit (4) der zweiten Baugruppe (7) ausgegeben werden.

15. Verfahren nach Anspruch 14,
wobei Diagnosemeldungen bzgl. einer Verdrahtung der Klemmstellen und/oder Steckverbinder (6) über die Kommunikationsverbindung von der ersten Baugruppe (1) an die zweite Baugruppe (7) übermittelt und mittels der Anzeigeeinheit (4) der zweiten Baugruppe (7) ausgegeben werden.

16. Verfahren nach Anspruch 14 oder 15,
wobei Statusmeldungen von zumindest einer Ein- und/oder Ausgabeeinheit über die Kommunikationsverbindung von der ersten Baugruppe (1) an die zweite Baugruppe (7) übermittelt und mittels der Anzeigeeinheit (4) der zweiten Baugruppe (7) ausgegeben werden.

17. Verfahren nach einem der Ansprüche 14 bis 16,
wobei der spezielle Betriebszustand durch Öffnen der Tür (2) aktiviert und durch Schließen der Tür (2) deaktiviert wird.

18. Verfahren nach einem der Ansprüche 14 bis 17,
wobei die Anzeigeeinheit (4) als Display ausgeführt wird.

19. Verfahren nach einem der Ansprüche 14 bis 18,
wobei die Anzeigeeinheit (4) an einer Frontseite der zweiten Baugruppe (7) angeordnet wird.

20. Computerprogramm, das Softwarecodes umfasst, der zur Durchführung eines Verfahrens nach einem der Ansprüche 14 bis 19 konzipiert wurde, wobei das Programm zur Ausführung auf einer speicherprogrammierbaren Steuerung (SPS) (5) nach Anspruch 13 vorgesehen ist.

21. Computerlesbarer Datenträger der das Computerprogramm nach Anspruch 20 umfasst.

## Claims

1. Module (1) of a Programmable Logic Controller (PLC) (5) with a door (2) located on its front side, behind which terminal positions and/or connectors (6) as well as a display (3) are arranged, with the PLC (5) being put into a special operating state in which a status message is able to be transmitted for each terminal position and/or each connector (6) via a communication link to a second module (7) **characterised in that** an indication is able to be output at the second module (7) in this operating state by means of the display (3).

2. Module according to claim 1,
with diagnostic messages relating to cabling of the terminal positions and/or connectors (6) being able to be transferred via the communication link to the second module (7).

3. Module according to claim 1 or 2
with at least one input and/or output unit, to which a status message is able to be transferred via the communication link to the second module (7).

4. Module according to one of the previous claims,
with the specific operating state being able to be activated by opening the door (2) and deactivated by closing the door (2).

5. Module according to one of the previous claims,
with the module (1) featuring a display unit (4).

6. Module according to claim 5,
with the display unit (4) being embodied as a display screen.

7. Module according to claim 5 or 6,
with the display unit (4) being arranged in the outer side of the door (2).

8. Module (7) according to claim 5, with the status messages of the terminal positions and/or connectors (6) of the second module (1) being able to be displayed by means of the display unit (4).

9. Module according to claim 8,
with diagnostic messages relating to the cabling of the terminal positions and/or connectors (6) being able to be transferred to the second module (1) via the communication link and displayed by means of the display unit (4).

10. Module according to claim 8 or 9,
with status messages being able to be transferred from at least one input and/or output unit to the second module (1) via the communication link and displayed by means of the display unit (4).

11. Module according to one of the claims 8 to 10,
with the display unit (4) being embodied as a display screen.

12. The module as claimed in one of the claims 8 to 11,
with the display unit (4) being arranged on a front side of the module (7).

13. Programmable Logic Controller (PLC) (5) with at least one first module (1) according to one of the claims 1 to 7 and with at least one second module (7) according to one of the claims 8 to 12, with the PLC (5) featuring a special operating state in which status and/or diagnostic messages are able to be transmitted via a communication link from the first module (1) to the second module (7).

14. Method for supporting service activities at a Programmable Logic Controller (PLC) (5) with at least one first (1) and one second module (7), with the first module (1) having terminal positions and/or connectors (6) behind a door (2) located on the front of it as well as a display (3) and with the second module (7) featuring a display unit (4), with
- the door (2) of the first module (1) being opened,
- the PLC (5) being put into a special operating state, in which
○ status messages about each terminal position and/or each connector (6) are transferred via a communication link from the first module (1) to the second module (7),
o an indication is shown on the second module (7) by means of the display (3) on the first module (1) and
o the status messages are output by means of the display unit (4) of the second module (7).

15. Method according to claim 14,
with diagnostic messages relating to cabling of the terminal positions and/or connectors (6) being transferred via the communication link from the first module (1) to the second module (7) and being output by means of the display unit (4) of the second module (7).

16. Method according to claim 14 or 15,
with status messages being transferred from at least one input and/or output unit via the communication link of the first module (1) to the second module (7) and output by means of the display unit (4) of the second module (7).

17. Method according to one of claims 14 to 16,
with the specific operating state being activated by opening the door (2) and deactivated by closing the door (2).

18. Method according to one of claims 14 to 17,
with the display unit (4) being embodied as a display screen.

19. Method according to one of claims 14 to 18,
with the display unit (4) being arranged on the front side of the second module (7).

20. Computer program, comprising software codes, which was designed for implementing a method according to one of claims 14 to 19, with the program being designed to be executed on a Programmable Logic Controller (PLC) (5) according to claim 13.

21. Machine-readable data carrier comprising the computer program according to claim 20.

## Revendications

1. Module (1) d'un automate programmable ( AP ) ( 5 ) ayant une porte (2) qui se trouve sur le côté avant et derrière laquelle sont disposés des points de borne et/ou des connecteurs ( 6 ) à fiche, ainsi qu'un indicateur ( 3 ), l'AP ( 5 ) pouvant être mis dans un état de fonctionnement spécial? dans lequel un message de statut de chaque point de borne et/ou de chaque connecteur ( 6 ) à fiche peut être transmis à un deuxième module ( 7 ) par une liaison de communication, **caractérisé en ce qu'**une indication peut être émise dans cet état de fonctionnement vers le deuxième module ( 7 ) au moyen de l'indicateur ( 3 ).

2. Module suivant la revendication 1,
dans lequel des messages de diagnostic concernant un câblage des points de borne et/ou des connecteurs ( 6 ) à fiche sont transmis au deuxième module ( 7 ) par la liaison de communication.

3. Module suivant la revendication 1 ou 2,
comprenant au moins une unité d'entrée et/ou de sortie, dont un message d'état peut être transmis au deuxième module ( 7 ) par la liaison de communication.

4. Module suivant l'une des revendications précédentes,
dans lequel l'état de fonctionnement spécial peut être activé en ouvrant la porte ( 2 ) et désactivé en fermant la porte ( 2 ).

5. Module suivant l'une des revendications précédentes,
dans lequel le module ( 1 ) a une unité ( 4 ) d'indication.

6. Module suivant la revendication 5,
dans lequel l'unité ( 4 ) d'indication est réalisée en affichage.

7. Module suivant la revendication 5 ou 6,
dans lequel l'unité ( 4 ) d'indication est disposée dans la face extérieure de la porte ( 2 ).

8. Module ( 7 ) suivant la revendication 5, dans lequel les messages de statut des points de borne et/ou des connecteurs ( 6 ) à fiche peuvent être indiqués au deuxième module ( 1 ) au moyen de l'unité ( 4 ) d'indication.

9. Module suivant la revendication 8,
dans lequel par la liaison de communication des messages de diagnostic concerne un câblage des points de borne et/ou des connecteurs ( 6 ) à fiche peuvent être transmis au deuxième module ( 1 ) et être indiqués au moyen de l'unité ( 4 ) d'indication.

10. Module suivant la revendication 8 ou 9,
dans lequel par la liaison de communication des messages de statut peuvent être transmis par au moins une unité d'entrée et/ou de sortie au deuxième module ( 1 ) et être indiqué au moyen de l'unité ( 4 ) d'indication.

11. Module suivant l'une des revendications 8 à 10,
dans lequel l'unité ( 4 ) d'indication est réalisée en affichage.

12. Module suivant l'une des revendications 8 à 11,
dans lequel l'unité ( 4 ) d'indication est disposée sur un côté avant du module ( 7 ).

13. Automate ( 5 ) programmable comprenant ( AP ), au moins un premier module ( 1 ) suivant l'une des revendications 1 à 7 et au moins un deuxième module ( 7 ) suivant l'une des revendications 8 à 12, dans lequel l'( AP ) ( 5 ) a un état de fonctionnement spécial, dans lequel des messages de statut et/ou de diagnostic peuvent être transmis du premier module ( 1 ) au deuxième module ( 7 ) par une liaison de communication.

14. Procédé d'assistance à des opérations de service sur un automate ( 5 ) programmable ( AP ), comprenant au moins un premier module ( 1 ) et un deuxième module ( 7 ), le premier module ( 1 ) ayant, derrière une porte ( 2 ) se trouvant sur un côté avant, des points de borne et/ou des connecteurs ( 6 ) à fiche, ainsi qu'un indicateur ( 3 ) et le deuxième module ( 7 ) ayant une unité ( 4 ) d'indication dans lequel
- on ouvre la porte ( 2 ) du premier module ( 1 ),
- on met l'AP ( 5 ) dans un état de fonctionnement spécial, dans lequel
○ des messages de statut de chaque point de borne et/ou de chaque connecteur ( 6 ) sont transmis du premier module ( 1 ) au deuxième module ( 7 ) par une liaison de communication,
○ au moyen de l'indicateur ( 3 ) sur le premier module ( 1 ), une indication est indiquée sur le deuxième module ( 7 ) et
○ les messages de statuts sont émis à l'aide de l'unité ( 4 ) d'indication du deuxième module ( 7 ).

15. Procédé suivant la revendication 14,
dans lequel les messages de diagnostic concernant un câblage des points de bornes et/ou des connecteurs ( 6 ) à fiche sont transmis du premier module ( 1 ) au deuxième module ( 7 ) par la liaison de communication et sont émis au moyen de l'unité ( 4 ) d'indication du deuxième module ( 7 ).

16. Procédé suivant la revendication 14 ou 15,
dans lequel les messages de statut d'au moins une unité d'entrée et/ou de sortie sont transmis du premier module ( 1 ) au deuxième module ( 7 ) par la liaison de communication et sont émis au moyen de l'unité ( 4 ) d'indication du deuxième module ( 7 ).

17. Procédé suivant l'une des revendications 14 à 16,
dans lequel l'état de fonctionnement spécial est activé par ouverture de la porte ( 2 ) et est désactivé par fermeture de la porte ( 2 ).

18. Procédé suivant l'une des revendications 14 à 17,
dans lequel l'unité ( 4 ) d'indication est réalisée en affichage.

19. Procédé suivant l'une des revendications 14 à 18,
dans lequel l'unité ( 4 ) d'indication est disposée sur un côté avant du deuxième module ( 7 ).

20. Programme informatique, qui comprend un code logiciel qui a été conçu pour effectuer un procédé suivant l'une des revendications 14 à 19, le programme étant prévu pour être réalisé sur un automate ( 5 ) programmable ( AP ) suivant la revendication 13.

21. Support de données pouvant être lu par un ordinateur, qui comprend le programme informatique suivant la revendication 20.
